# EUROPEAN PATENT SPECIFICATION

(11) **EP 0 754 901 B1**
(45) Date of publication and mention of the grant of the patent: **23.02.2000**
(21) Application number: 96305363.2
(22) Date of filing: 22.07.1996
(51) Int. Cl.: F16L 55/033, G10K 11/16, F01N 1/12, F24F 13/24

(54) **Noise attenuators, their manufacture, and their use for noise attenuation in ducts**
Schalldämpfer, ihre Herstellung und ihre Verwendung zur Schalldämpfung in Leitungen
Dispositifs d'atténuation de bruit, leur fabrication et leur utilisation pour l'atténuation de bruit dans les canalisations

(30) Priority: 21.07.1995 GB 9514951; 16.01.1996 GB 9600834
(43) Date of publication of application: 22.01.1997
(73) Proprietor: Gladden, Robert Alan, Wallington Surrey SM6 9QJ (GB)
(72) Inventor: Gladden, Robert Alan, Wallington Surrey SM6 9QJ (GB)
(74) Representative: Stoner, Gerard Patrick

(56) References cited:
- WO-A-87/03948
- CH-A- 156 689
- CH-A- 203 906
- DE-A- 2 620 169
- DE-A- 3 335 210
- GB-A- 746 949
- GB-A- 2 083 864

## Description

This application has to do with the construction and implementation of noise attenuation arrangements for gas flow ducts, particularly although not exclusively in air-conditioning and other ventilating systems.

In ducted air movement ventilation or air-conditioning systems, the accepted method of reducing fan and mechanical noise is to insert a purpose-built attenuator in the ductwork between the fan and the building space being served. In most systems the ductwork is rectangular or square in section (typically about 1m²) and therefore the attenuators are also normally rectangular or square in section. The conventional construction for rectangular or square attenuators is a sheet steel outer case or body of similar sectional shape forming a duct, with a set of parallel rectangular-section acoustic elements or splitters extending at intervals across the duct. Each splitter normally consists of a peripheral sheet steel frame holding a flat infill of absorbent material exposed to the airflow. In practice the attenuators are factory manufactured items of considerable complexity which have to be inserted into a break in the ductwork. As the ductwork will vary, many shapes and sizes of attenuator module are needed and manufacture costs are high.

CH-156689 and DE-A-2620169 disclose acoustic elements - either intersecting plates or open tubular units of square, round or other section - located in symmetrical self-supporting arrays in a duct. These are poor in broad-band noise reduction, however, and tubular units are inconvenient.

Noise rating curves are well known for many different situations and are normally specified for particular applications; using these data together with knowledge of fan noise levels and natural attenuation losses in the ductwork it is possible to determine the minimum acceptable attenuation required for a given system attenuator. Most conventional attenuators (using a 331/3% free cross-sectional area) reduce higher frequency noise more readily than lower frequency noise. But, for the majority of applications the attenuator design or selection is limited by the low frequency attenuation required (commonly assessed at 125 Hz) leading to more attenuation at middle and higher frequencies than actually required.

General aims herein include the provision of new and useful attenuator arrangements for ducts, sound-absorptive modules and inserts for use in such arrangements, and methods of providing sound attenuation in ducted systems.

One aspect of the invention is an attenuator arrangement for attenuating noise transmission along a gas flow duct, according to claims 1 and 7. Each insert comprises or consists essentially of a body of sound-absorbing material having a substantially solid cross-section with peripheral location extremities (apexes and/or extended surfaces of the body) running lengthwise. These location extremities support and align the body in the duct by fitting against the duct casing and/or the peripheries of other insert bodies. The insert body also has at least one flat or substantially flat lengthwise attenuation surface which, when the body is aligned in the duct, faces onto the gas flow passage and is inclined to an opposed duct casing surface, preferably at at least 20°. The attenuation surface is desirably parallel to the duct's longitudinal axis.

By 'solid cross-section' I mean that the insert body presents a solid cross-section to flow in the duct. So, the body can actually be solid (free of gross internal cavities) and often this is practical. It may be for example a foam outer cover on a mineral fibre core, or an all-foam body. However the body may have one or more internal openings or cavities provided that no gross internal flow passage is created, i.e the body is functionally non-tubular. One may use for example a tubular form which is blocked e.g. by one or more end-caps and/or intermediate transverse walls.

It is possible to chamfer a longitudinal edge to create a minor surface between major surfaces of a basic shape, e.g. triangle or square. This technique provides a convenient way of providing inserts which will give a predetermined flow cross-section in a duct of given shape, as well as giving greater grip against the duct wall and/or against each other.

For good attenuation at low frequencies, preferably at least part of the or each body has at least 100mm solid thickness. Or, at least part of the body provides at least 80mm solid thickness (and more preferably at least 100mm) in a direction perpendicular to the attenuation surface.

While previous arrangements of acoustic materials in a duct have tended to aim at increasing the exposed surface area of acoustic material they have not provided the necessary thickness of material to absorb low frequency noise in an efficient manner. The arrangements described above facilitate the provision of both high surface area and high acoustic material thickness (preferably a minimum of 100mm).

Inclining a sound-absorbing surface to the (typically reflective) duct wall enables absorption of sound vibrations in all directions around the propagation axis, as explained in more detail below, while the three-dimensional thickness and solidity of the bodies is easily provided to give good attenuation at lower frequencies.

One preferred form 6f insert is a solid triangular prism. Any triangular shape can fit in any shape of duct provided that the size is right, but right-angled triangular sections are particularly convenient for manufacture and for rectangular duct casings, the hypotenuse being the attenuation surface and one or both of the other surfaces locating and aligning against the duct walls. However other triangular forms or alignment can be used, e.g. with a single surface engaging the duct wall face-to-face and the only other engagement being at the opposing apex. Two or more triangular inserts can lie side-by-side to occupy rectangular ducts of various widths. For circular ducts, isosceles and particularly equilateral triangular sections are convenient, locating by direct contact of their three body apexes (which may be chamfered) against the duct wall.

Preferably the free area (flow area) in the duct at the attenuator is in the range from 30 to 60%, more preferably 30 to 50% of the duct's cross-section.

As regards materials, the insert bodies may be formed using any suitable sound-absorptive substance and preferably one with good shape retention. Mineral wool or fibre glass may be used, although such bodies usually need to be covered with a facing material to prevent the escape of mineral fibre material. We find that an open-cell foam layer makes an excellent facing material. So, in a further aspect the invention provides a sound absorbing insert according to claim 11.

The sound absorbing inserts may be based on foam material. Acoustic foam is more expensive than mineral fibre. However I note that for relatively small inserts the extra cost of all-foam is more than offset by the saving in not applying a cover. Furthermore an all-foam insert body has the advantage of greater flexibility, making it particularly suitable for attenuator installation in a duct casing *in situ.*

The units may have end plates connected by one or more longitudinal tie bars, to ensure adequate strength or shape retention according to the given requirements. They may indeed be fixed to the duct wall if necessary, e.g by mechanical or adhesive fixing.

This application also covers methods of making duct noise attenuation assemblies having one or more of the described inserts positioned in a duct.

Some other proposals concern ways of installing noise attenuation in ducts of air-conditioning or other ventilation systems. In general a typical system has an air-conditioning or ventilation plant connected to a duct system leading to one or more duct openings into the room(s) served by the system: these constitute the terminals of the system. The duct system may be branched, with a single primary duct branching into plural secondary ducts. Conventionally a custom-built attenuator device - an expensive arrangement as previously discussed - is installed in the duct system immediately downstream of the plant to absorb the plant's operating noise. My attenuator arrangements can be used for that, as described in my earlier application. However typical duct systems present some extra noise problems and I now propose some ways of addressing them.

A first problem arises with system pressure adjustment. Gas pressure generated by a plant must be sufficient to serve the "index run", i.e. the most difficult to reach (normally the most distant) terminal of the system. Control dampers are then needed to prevent excessive service pressure at more accessible terminals. These dampers constitute a source of noise (typically mid- to high-frequency) downstream of the plant.

Ideally all ducts have as few corners and are as large as possible, but inevitably other constructional demands sometimes compel high flow speeds and/or tortuous duct paths. These cause turbulence, another source of noise (particularly in the mid-frequency and high-frequency ranges) which is transmitted down the duct to the corresponding terminal(s).

Another problem arises with the increasing use of locally-mounted ventilation/conditioning plants, especially fan coil units mounted in ceiling voids which are popular for room air-conditioning. Noise problems can arise at both the discharge and intake sides of such units.

There can also be difficulties with noises transmitted along a duct although not generated within it. For example a service duct common to two rooms can transmit noise between them.

Conventionally these secondary noise problems tend to be ignored. The expense of conventional custom-built attenuator units and the labour involved in installing them have made the inclusion of extra attenuation a luxury.

I propose a convenient way of providing attenuation in such situations. For example, an attenuator can be provided downstream of any control damper or similar control device apt to generate system noise. Where a duct generates noise through turbulence, attenuation can be provided at or near the corresponding terminal opening(s). Where a plant is installed locally e.g. in a ceiling void, attenuation can be provided in its discharge duct and if desired in the intake as well. Where there is "cross-talk" between rooms because of a common duct, local attenuation can be installed in this duct.

The noise attenuation can be provided by putting sound-absorbing duct inserts in the ducts at the appropriate places. This can be done in the existing or standard duct casing, without custom-building an attenuator module, so avoiding considerable labour and expense. By using insert bodies which have good flexibility, e.g. all-foam insert bodies, such attenuation can be provided even when the duct system is substantially or entirely complete, e.g. as an up-grading of an existing system. Such inserts are preferably supported and aligned entirely by their own engagement with the duct walls (and with one another, if more than one), so no special construction or fixing is needed.

Duct insert product may be made in a range of standard sizes. Standard lengths can easily be adjusted by cutting.

Embodiments of my proposals are now described by way of example, with reference to the accompanying drawings in which:
Figure 1 is a cross sectional view of an attenuator formed by an array of modular acoustic units in a duct;
Figure 2 is a transverse sectional view of one of the acoustic units;
Figure 3 is a longitudinal sectional view of the acoustic unit;
Figure 4 shows a disposition of the attenuator in a ventilation arrangement;
Figures 5, 6, 7 and 8 show other arrays including full, half and quarter section modules;
Figure 9 illustrates schematically the passage of sound waves through a conventional attenuator and the effects of the sound waves on the horizontal major axis and vertical major axis;
Figure 10 shows a conventional splitter arrangement used in comparative tests described below;
Figure 11 is a graph of acoustic performances measured in the tests;
Fig 12 shows a single all-foam insert in a rectangular duct;
Fig 13 and Fig 14 are end views of single and double inserts in rectangular ducts;
Fig 15 shows an insert in a circular-section duct;
Fig 16 shows multiple inserts in a wide rectangular fan coil unit discharge duct, and
Fig 17 shows (schematically) a noise attenuation arrangement between rooms.

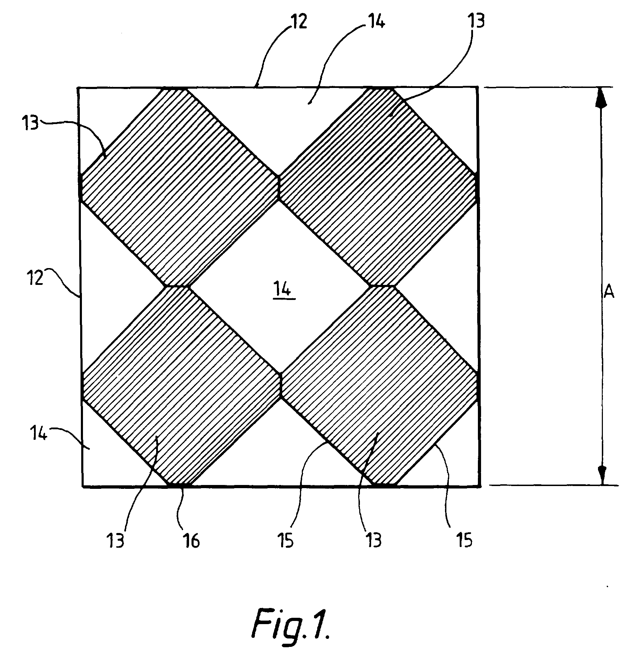

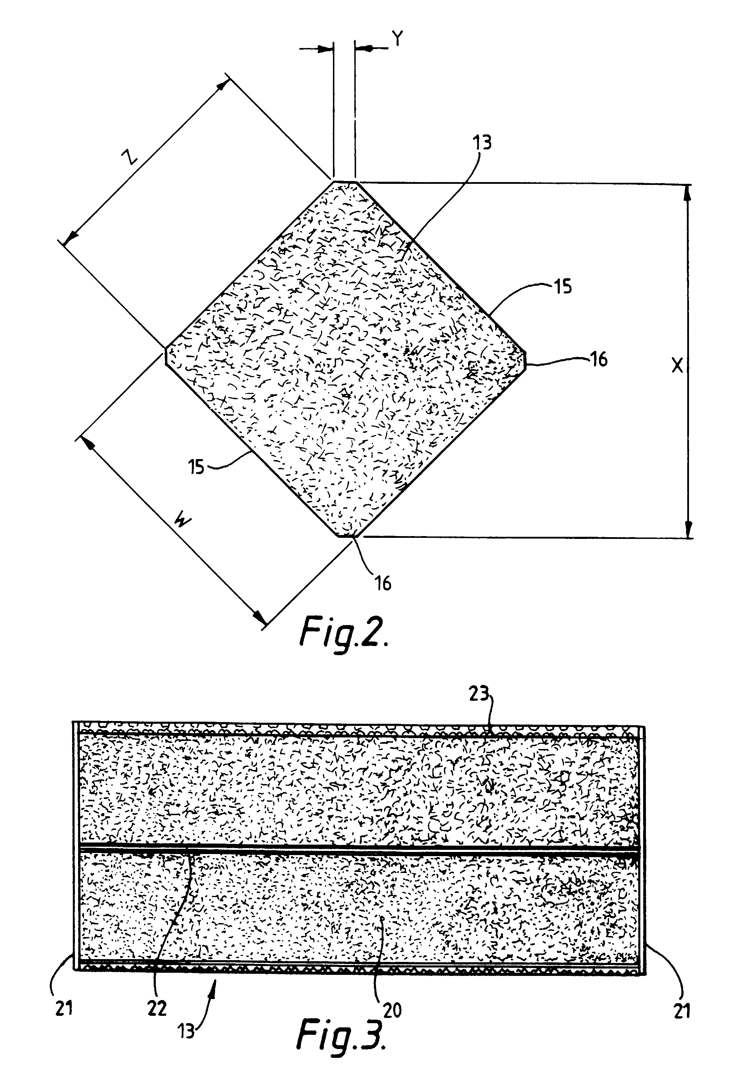

Referring first to Figure 1, a square section duct having walls 12 defining a passageway of internal side dimension A has located in it an array of four solid prismatic units 13, each unit being made of acoustic material. The array extends over substantially the whole passage area of the duct with spaces 14 between the units of the array and the walls of the duct. The array is supported by the walls of the duct and interengagement between the units. Each unit is substantially square having four major external surfaces 15, each extending at an angle of 45 degrees to the duct walls and the corners of the modules contacting the walls and each other and the diagonals of the units being parallel to the respective walls of the duct. As can be seen from Figures 1 and 2, each unit is not exactly square but has its corner edges chamfered to provide minor flat sides 16.

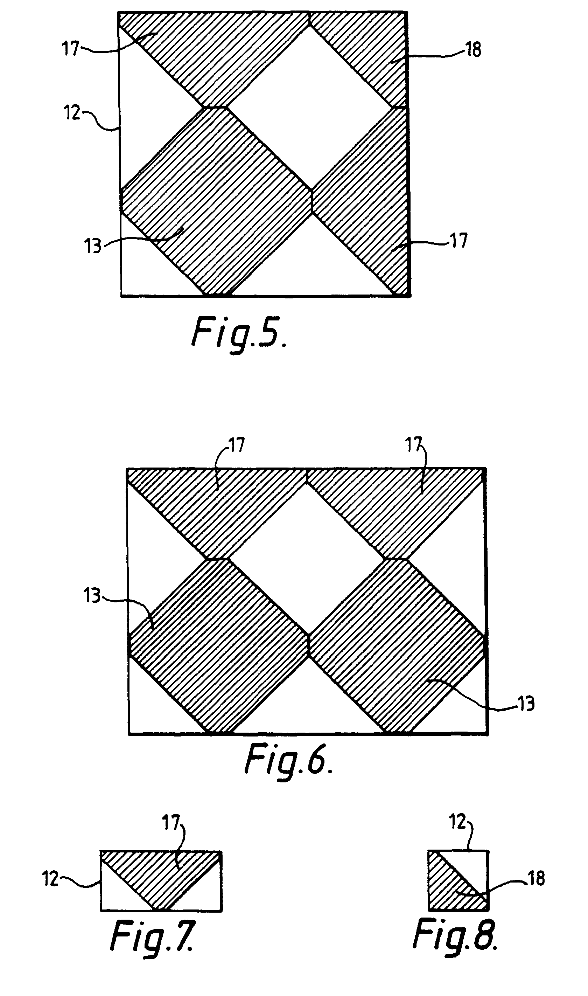

Ducts tend to be made in a range of standard sizes and the dimension of the module in a direction parallel to the duct wall is preferably a whole number fraction of the dimension A of the duct. In this case X, as seen in Figure 2 is half of A, therefore for a duct where A equals 600 mm then X would equal 300 mm. The dimension Y is then 10 mm, Z is 205 mm and W is 219 mm. Modules would be made in a variety of sizes to fit into different standard sizes of duct. Figures 5 and 6 show array options including full, half and quarter section modules 13, 17, 18, while Figures 7 and 8 show ducts including only half or quarter section modules 17, 18.

This arrangement of units in a duct will provide a 50% free area if the modular units are exactly square, 46.72% for the modules in the shape and arrangement as shown and dimensions as indicated above, and a free area of 17% if the modules were regular octagons. Clearly the free area can be varied by changing the lengths of the major sides and minor sides and generally can be selected by choosing the shape of the module. The arrangement of modules as shown can provide an optimum relationship between acoustic material thickness, passage airway and exposed surface area of acoustic material.

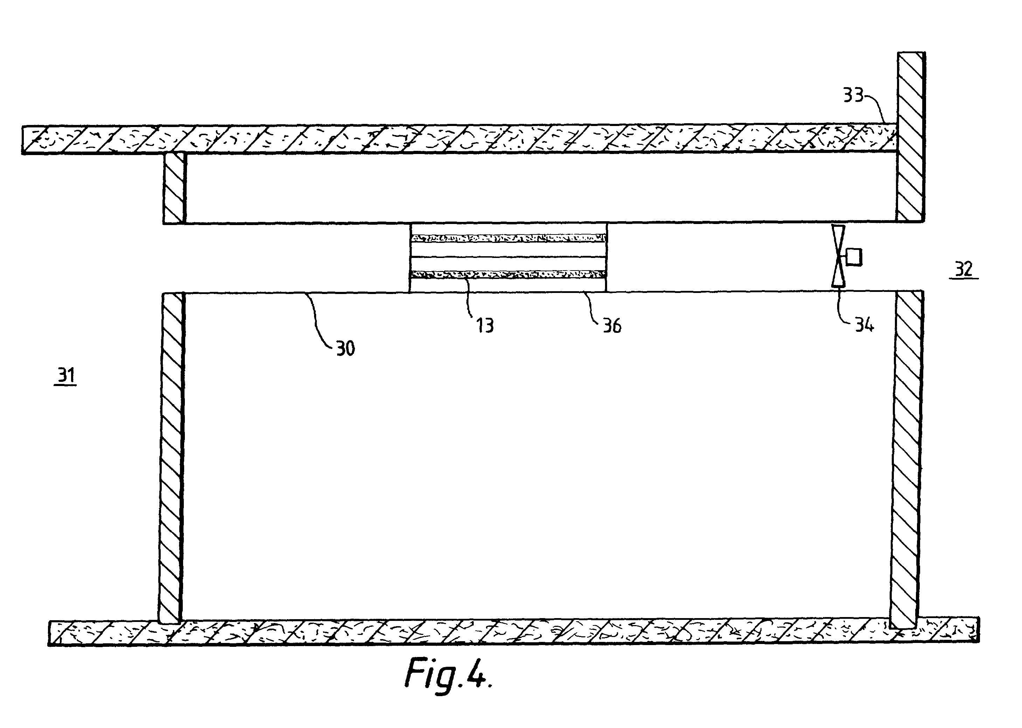

Figure 3 shows a preferred construction of one unit 13. A cylindrical length of acoustic material 20 in the form of mineral fibre (which may be glass fibre) is located between metal end plates 21 connected by an axially extending tie rod 22 to provide stability. The cylindrical outer wall is wrapped in a sheet 23 of open cell acoustic foam material which acts as a filter for mineral fibre particles to prevent their escape, but allows penetration of sound waves.

Figure 4 shows an *in situ* length of ventilation duct 30 extending between an interior room 31 and the exterior 32 of a building 33. A fan 34 is located in the duct to provide a forced airflow through the duct. A section of duct 36 corresponding to the duct 12 of Figure 1 contains an array of modular units 13 extending for the length of a single module only, for example 2m, and forming a noise attenuator between the fan 34 and the interior room 31.

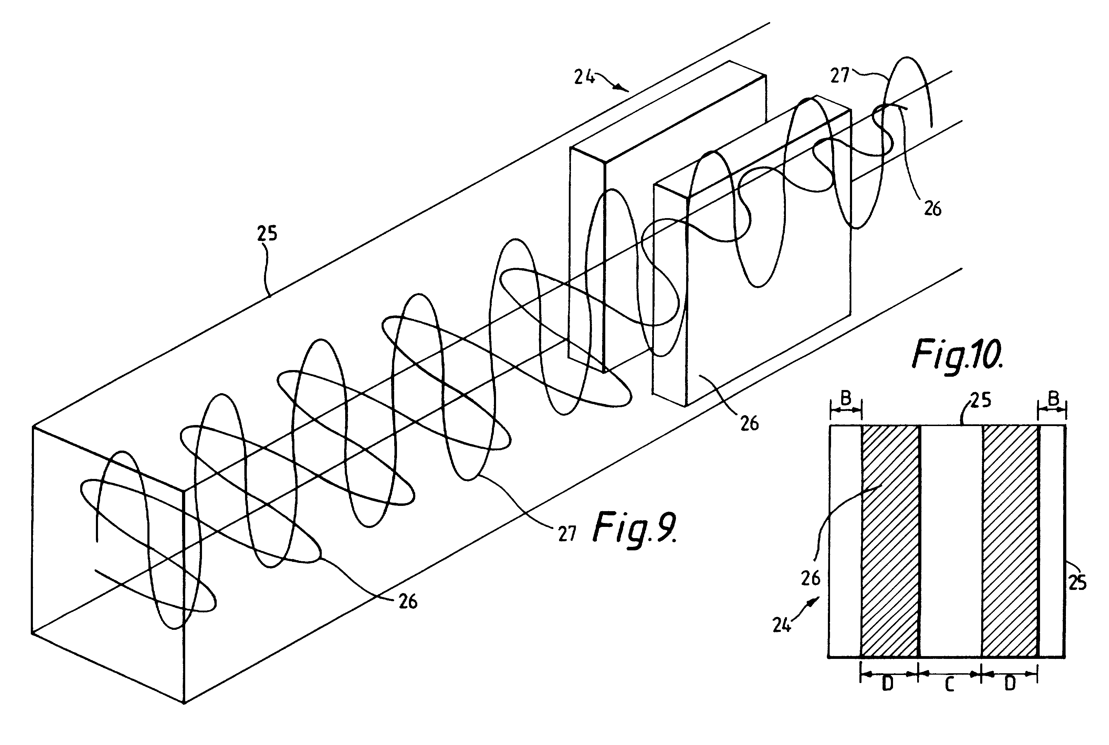

Sound waves travel down a ducted system at all angles of incidence through 360 degrees around the central axis of the duct. Figure 9 illustrates the passage of sound waves through a conventional attenuator 24 in a duct section 25 having acoustic splitters 26, and the effect on the sound waves 27, 28 in the horizontal major axis and vertical major axis directions respectively.

The array of acoustic modules ensures similar attenuation properties in two planes, rather than the single plane effect of the conventional attenuator, and the array ensures the maximum acoustic material thickness for optimum acoustic performance at low frequencies in relationship to the passage airway and free area of the array and enhanced acoustic performance generally throughout the frequency range.

Acoustic performance testing has been carried out on a test rig constructed to British Standard BS4718 (1971) as required for such testing. Tests carried out in accordance with the requirements of that specification are now described to show the attenuation performance achieved with these arrangements.

Tests were carried out in the 600 x 600 duct section of the test rig comparing a 46.7% free area conventional splitter attenuator arrangement as in Figure 10 in which B = 70 mm, C = 140 mm and D = 160 mm with a 46.7% free area array arrangement of modules as shown in Figure 1. The core and facing materials for the conventional acoustic splitters and the array modules were the same grade and density of materials, so that the comparison reflects the enhancement in acoustic performance due to my proposals relative to the conventional alternative.

The results of the tests with the following attenuators
41 = 1 metre length (Figure 10)
42 = 1 metre length (Figure 1)
43 = 2 metre length (Figure 10)
44 = 2 metre length (Figure 1)
were:

| | | **Octave band mid-frequencies (Hz)** | | | | | | | | |
|---|---|---|---|---|---|---|---|---|---|---|
| | attenuator | 31 | 63 | 125 | 250 | 500 | 1K | 2K | 4K | 8K |
| 41 | insertion loss | 0 | 2.3 | 4.6 | 11 | 19 | 28 | 23 | 14 | 12 |
| 42 | (Db) | 0 | 3.1 | 6.6 | 1.6 | 24 | 33 | 33 | 23 | 22 |
| 43 | | 0 | 4.1 | 8.6 | 20 | 41 | 49 | 47 | 33 | 26 |
| 44 | | 0 | 4.8 | 12 | 25 | 44 | 49 | 51 | 40 | 33 |

In the lower and higher frequencies there is a marked improvement in attenuation. Particularly at 125 Hz these figures can be seen to show a 43% and a 39% increase.

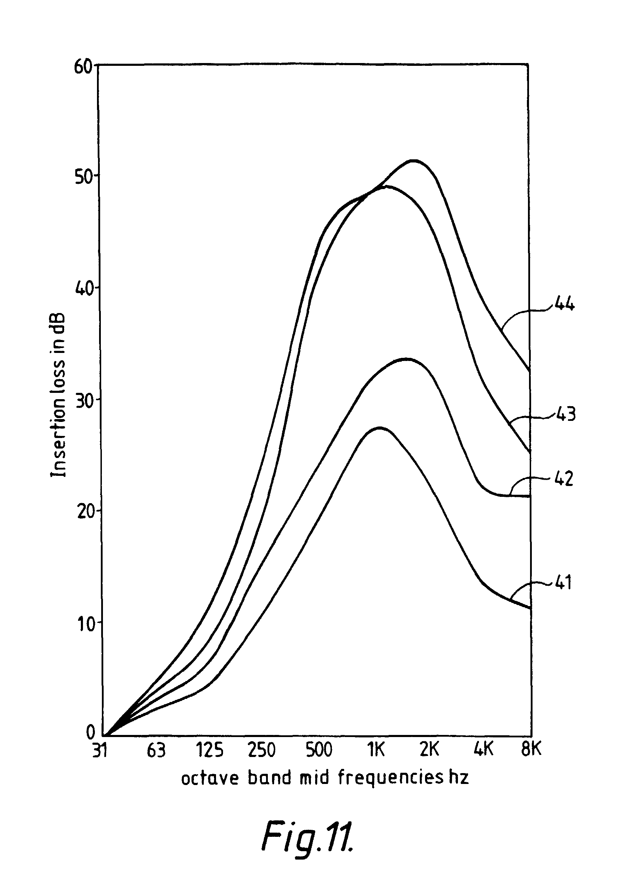

Figure 11 is a graph of the performance achieved for both arrangements for 1 metre and 2 metre long test sections and clearly shows the benefit of the present array modules.

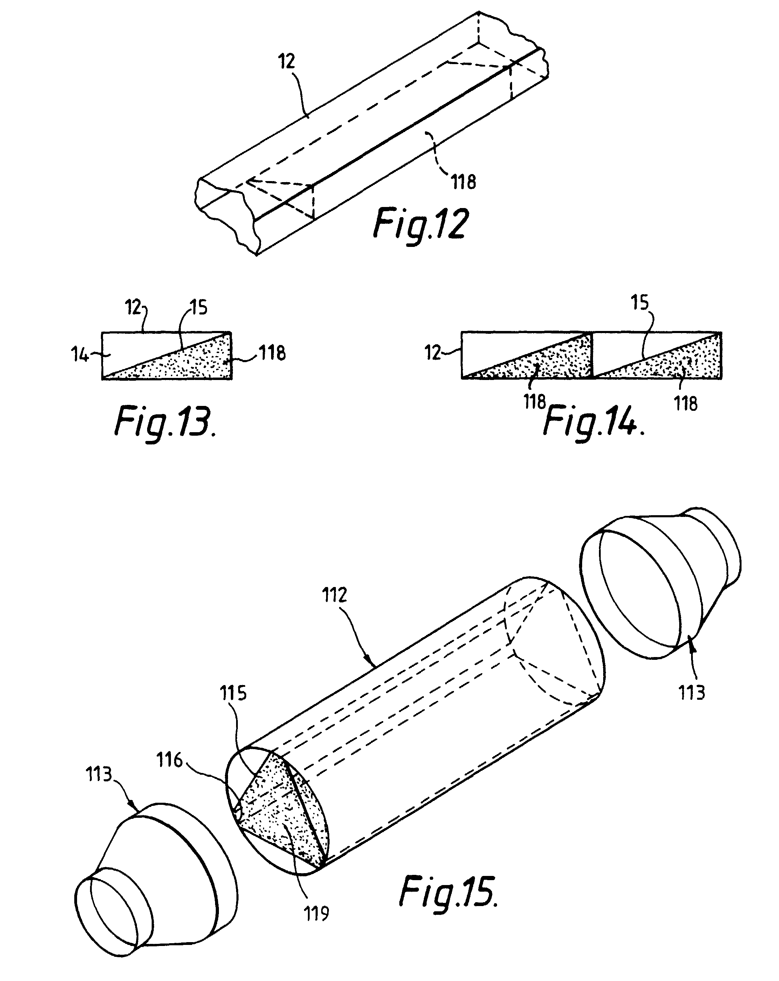

Figs 12, 13 and 14 show dispositions of foam inserts 118 in rectangular-section duct 12. The duct 12 can be part of an existing duct system, not necessarily enlarged in relation to adjacent duct sections.

The foam inserts 118 have a right-angled triangle cross-section. The small angle of the triangle is generally at least about 20° and preferably at least 25°. The insert 118 is a single solid piece of any suitable sound-absorbing open-cell foam material e.g. polyethylene or melamine foam. The reader will understand that, particularly for larger inserts, a fibre-filled foam sleeve or a hollow foam tube closed against air flow may be used instead. The insert section is chosen to extend right across the duct interior, the right-angled surfaces fitting along and up the duct walls and the oblique surface 15 facing onto the flow passage 14 which is 50% of the duct area.

A set of standard insert sections is made available corresponding to standard duct sizes. For example, widths of 100, 150, 200 and 300mm in combination with any height from that range and also 400mm. Typically lengths are between 0.5 and 2m: standard available lengths might be e.g. 600mm and 1200mm, but of course the same material can easily be length-adjusted, on site if need be, by cutting. The small angle of the triangle in this set is preferably between 30° and 45°.

As described previously, the inclination of the oblique surface 15 relative to the opposed duct walls ensures that sound vibrations in all directions can be absorbed. Furthermore, the use of a solid triangular section presents a substantial thickness of solid material enabling good absorption at the lower frequencies e.g. around 125Hz.

Fig 14 shows the use of two inserts side by side to fill a larger duct. Many different sizes of duct can be filled to 50% by selecting appropriate members from the available set.

Fig 15 shows an all-foam insert 119 suitable for use in a circular duct 112. The insert 119 has a generally equilateral triangular cross-section presenting three main exterior surfaces 115 for noise attenuation. A truly triangular insert would give nearly 60% flow area. To adjust flow area to about 50% the longitudinal edges 116 of the insert are chamfered; this also improves frictional engagement against the duct wall. Each attenuation surface 115 is inclined relative to all but the exact centre of the opposing section of duct wall. It may be advantageous to enlarge the duct locally and the drawing shows end adaptors 113 for this purpose. However such an insert may also be used in an existing duct without enlargement if the flow characteristics are suitable.

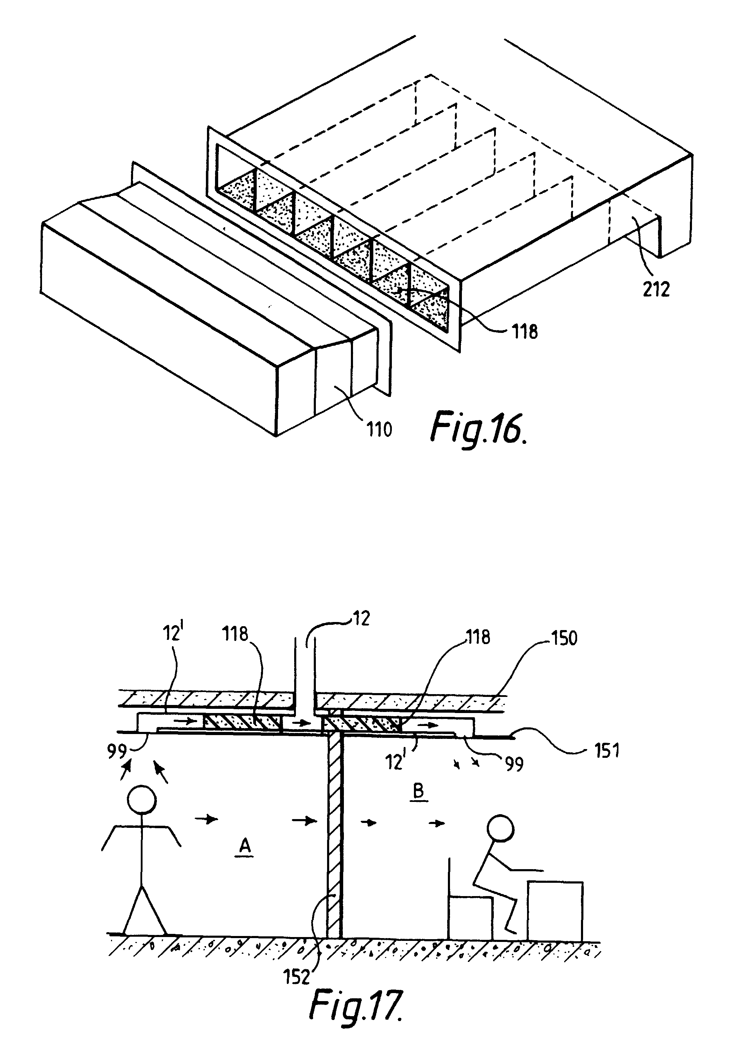

Fig 16 shows an arrangement of right-angled triangle inserts 118, here with a 45° angle, in a discharge connection duct 212 connected to a fan coil air-conditioning unit whose own discharge duct 110 is shown detached to expose the inserts 118. Because of their flexibility, it will be possible to install the set of inserts 118 even through the angled exhaust of the discharge duct 212 if need be.

Fig 17 shows a pair of rooms A,B separated by a blockwork wall 152. A false (suspended) ceiling 151 is mounted at a spacing below the true ceiling 150. A primary air conditioning duct 12 entering through the true ceiling 150 divides into branch ducts 12' with respective openings 99 into the respective rooms A, B. The sound insulation provided by the wall 152 is potentially compromised by sound communicating along the branch ducts 12'. To prevent this from being a problem, all-foam duct inserts 118 are pushed into each of the branch ducts as shown. By providing an insert in each branch the arrangement cuts out system noise otherwise propagating from the main duct system 12 into both rooms, as well as preventing noise communication between the rooms.

## Claims

1. An attenuator arrangement for attenuating noise transmission along a gas flow duct of rectangular cross-section, comprising one or more sound-absorbing inserts arranged in the duct so that at least one gas flow passage is defined through the arrangement past the insert(s), the or each insert consisting essentially of a solid body of sound-absorbing material which has a substantially solid square, or triangular transverse cross-section and is self-supported and aligned in the duct by fitting engagement of its peripheral lengthwise extremities against the duct wall and/or against the peripheral extremities of one or more adjacent such inserts, the body of sound-absorbing material having a substantially flat longitudinal attenuation surface which forms a wall of the or a said gas flow passage and, in transverse cross-section, is inclined in the duct at an angle between 20 and 70° to the portion of the duct wall opposing it across said gas flow passage.

2. An arrangement according to claim 1 in which the transverse cross-section of the or each insert is a right-angled triangle whose smallest angle is at least 20°.

3. An arrangement according to claim 2 in which said smallest angle is at least 25°.

4. An arrangement according to claim 2 or claim 3 in which the surfaces of the insert corresponding to the right-angled sides of the triangle fit against respective mutually perpendicular walls of the duct, the hypotenuse surface being the attenuation surface.

5. An arrangement according to any one of the preceding claims in which a single said insert spans between opposed walls of the duct.

6. An arrangement according to any one of claims 1 to 4 in which plural said inserts are present as a self-supporting, self-aligning array of said inserts which spans the duct.

7. An attenuator arrangement for attenuating noise transmission along a gas flow duct of circular cross-section, comprising a sound-absorbing insert arranged in the duct so that gas flow passages are defined through the arrangement past the insert, the insert consisting essentially of a body of sound-absorbing material of substantially solid isosceles or equilateral triangular transverse cross-section, each of the three lengthwise extremities corresponding to the apexes of the triangle contacting against the duct wall to align and support the body in position in the duct, and the flat lengthwise surfaces of the body providing longitudinal attenuation surfaces which form respective inner walls of the three gas flow passages past the body in the duct.

8. An arrangement according to any one of the preceding claims in which apexes of the square or triangular cross-section of the body are chamfered to provide low-area contact surfaces at said extremities.

9. An arrangement according to any one of the preceding claims in which the cross-sectional area of the gas flow passage(s) at the attenuator arrangement is from 30-60% of the cross-sectional area of the duct as a whole at the attenuator arrangement.

10. An arrangement according to any one of the preceding claims in which the or each insert body consists essentially of flexible polymeric sound-absorbing foam.

11. A sound-absorbing insert for attenuating noise transmission along a gas flow duct, consisting essentially of a body of sound-absorbing material which is capable of self-support and alignment in a duct by fitting engagement of its peripheral lengthwise extremities against the duct wall and/or against the peripheral extremities of one or more adjacent such sound-absorbing inserts, and said body having a substantially flat longitudinal attenuation surface, and wherein the transverse cross-section of the body is substantially solid and is a square with chamfered apexes, a right-angled triangle whose smallest angle is at least 20°, or an isosceles or equilateral triangle.

12. An insert according to claim 11 in which the body consists of sound-absorbing foam material.

13. An insert according to claim 11 or 12 whose transverse cross-section is a said right-angle triangle whose smallest angle is at least 25°.

14. An insert according to any one of claims 11 to 13 in which at least part of the body provides at least 80 mm solid thickness in a direction perpendicular to the attenuation surface.

15. A method of providing sound attenuation in a gas flow duct, comprising providing an attenuator arrangement according to any one of claims 1 to 10 at a location along the duct.

16. A method according to claim 15 in which the gas flow duct is part of an air-conditioning or ventilation system in a building.

17. A method according to claim 15 or claim 16 in which a said insert body as defined in claim 10 is inserted into an existing gas flow duct between a gas flow drive unit and an opening of the duct.

## Patentansprüche

1. Dämpferanordnung zum Dämpfen von Geräuschübertragung entlang einer Gasströmungsleitung mit rechteckigem Querschnitt, umfassend einen oder mehrere Schall absorbierende Einsätze, die in der Leitung so angeordnet sind, dass zumindest ein Gasströmungsdurchgang durch die Anordnung hindurch am Einsatz/an den Einsätzen vorbei definiert ist, wobei der oder jeder Einsatz im wesentlichen aus einem massiven Körper aus Schall absorbierendem Material besteht, der in Querrichtung einen im wesentlichen massiven quadratischen oder dreieckigen Querschnitt aufweist, und durch Passungseingriff seiner peripheren längsgerichteten Enden an der Leitungswand und/oder an den peripheren Enden eines oder mehrerer benachbarter derartiger Einsätze selbsttragend und in der Leitung ausgerichtet ist, wobei der Körper aus Schall absorbierendem Material eine im wesentlichen ebene längsgerichtete Dämpfungsoberfläche aufweist, die eine Wand des oder eines solchen Gasströmungsdurchgangs bildet, und die im Querschnitt in Querrichtung in der Leitung in einem Winkel zwischen 20 und 70° zum ihr am Gasströmungsdurchgang gegenüberliegenden Abschnitt der Leitungswand geneigt ist.

2. Anordnung nach Anspruch 1, bei der der Querschnitt in Querrichtung des oder eines jeden Einsatzes ein rechtwinkeliges Dreieck ist, dessen kleinster Winkel zumindest 20° beträgt.

3. Anordnung nach Anspruch 2, bei der der kleinste Winkel zumindest 25° beträgt.

4. Anordnung nach Anspruch 2 oder 3, bei der die Oberflächen des Einsatzes, die den rechtwinkeligen Seiten des Dreiecks entsprechen, gegen jeweilige zueinander senkrechte Wände der Leitung passen, wobei die Hypotenusenfläche die Dämpfungsfläche ist.

5. Anordnung nach einem der vorangegangenen Ansprüche, bei der sich ein einzelner solcher Einsatz zwischen gegenüberliegenden Seiten der Leitung erstreckt.

6. Anordnung nach einem der Ansprüche 1 bis 4, bei der mehrere solche Einsätze als selbstragende, selbst-ausrichtende Anordnung der Einsätze vorhanden sind, die sich über die Leitung erstreckt.

7. Dämpferanordnung zum Dämpfen von Geräuschübertragung entlang einer Gasströmungsleitung mit kreisförmigem Querschnitt, umfassend einen Schall absorbierenden Einsatz, der so in der Leitung angeordnet ist, dass Gasströmungsdurchgänge durch die Anordnung hindurch am Einsatz vorbei definiert sind, wobei der Einsatz im wesentlichen aus einem Körper aus Schall absorbierendem Material mit in Querrichtung im wesentlichen massivem gleichschenkelig oder gleichseitig dreieckigem Querschnitt besteht, wobei jedes der drei Längs-Enden, die den Scheiteln des Dreiecks entsprechen, die gegen die Leitungswand anliegt, um den Körper in Position in der Leitung zu halten, und die ebenen längsgerichteten Oberflächen des Körpers längsgerichtete Dämpfungsflächen bilden, die jeweilige Innenwände der drei Gasströmungsdurchgänge in der Leitung am Körper vorbei bilden.

8. Anordnung nach einem der vorangegangenen Ansprüche, bei dem Scheiteln des quadratischen oder dreieckigen Querschnitts des Körpers so abgeschrägt sind, dass an den Endflächen Kontakflächen mit geringer Oberfläche entstehen.

9. Anordnung nach einem der vorangegangenen Ansprüche, bei der die Querschnittsfläche des Gasströmungsdurchgangs/der Gaströmungsdurchgänge an der Dämpferanordnung 30 bis 60 % der Querschnittsfläche der Leitung insgesamt an der Dämpferanordnung ausmacht.

10. Anordnung nach einem der vorangegangenen Ansprüche, bei der der oder jeder Einsatzkörper im wesentlichen aus flexiblem Schall absorbierendem Polymerschaum besteht.

11. Schall absorbierender Einsatz zur Dämpfung von Geräuschübertragung entlang einer Gasströmungsleitung, im wesentlichen bestehend aus einem Körper aus Schall absorbierendem Material, der durch Eingriffspassung seiner längsgerichteten Umfangsenden an der Leitungswand und/oder an den peripheren Enden eines oder mehrerer benachbarter derartiger Schall absorbierender Einsätze zum Selbsttragen und zur Ausrichtung in einer Leitung fähig ist, wobei der Körper eine im wesentlichen ebene längsgerichtete Dämpfungsfläche aufweist, und worin der Querschnitt des Körpers in Querrichtung im wesentlichen massiv ist und ein Quadrat mit abgeschrägten Scheiteln, ein rechtwinkeliges Dreieck, dessen kleinster Winkel zumindest 20° beträgt, oder ein gleichschenkeliges oder gleichseitiges Dreieck bildet.

12. Einsatz nach Anspruch 11, bei dem der Körper aus Schall absorbierendem Schaummaterial besteht.

13. Einsatz nach Anspruch 11 oder 12, dessen Querschnitt in Querrichtung ein solches rechtwinkeliges Dreieck ist, dessen kleinster Winkel zumindest 25° aufweist.

14. Einsatz nach einem der Ansprüche 11 bis 13, bei dem zumindest ein Teil des Körpers in eine Richtung senkrecht zur Dämpfungsfläche eine massive Dicke von zumindest 80 mm aufweist.

15. Verfahren zum Bereitstellen von Schalldämpfung in einer Gasströmungsleitung, umfassend das Bereitstellen einer Dämpferanordnung nach einem der Ansprüche 1 bis 10 an einer Stelle entlang der Leitung.

16. Verfahren nach Anspruch 15, bei der die Gasströmungsleitung Teil eines Klimatisierungs- oder Belüftungssystems in einem Gebäude ist.

17. Verfahren nach Anspruch 15 oder 16, bei dem der Einsatzkörper wie in Anspruch 10 definiert zwischen einer Gasströmungsantriebseinheit und einer Öffnung der Leitung in eine bestehende Gasströmungsleitung eingesetzt wird.

## Revendications

1. Dispositif d'atténuation pour atténuer la transmission des bruits dans une canalisation d'écoulement gazeux de section rectangulaire, comprenant un ou plusieurs inserts absorbant le bruit disposés dans la canalisation de sorte qu'au moins un passage d'écoulement gazeux soit défini dans l'arrangement au-delà du ou des inserts, le ou chaque insert consistant essentiellement en un corps solide d'un matériau absorbant le bruit, qui présente sensiblement, une section transversale carrée ou triangulaire pleine et qui est autoporté et aligné dans la canalisation par engagement de ses extrémités longitudinales périphériques contre la paroi de la canalisation et/ou contre les extrémités périphériques d'un ou de plusieurs inserts adjacents, le corps du matériau absorbant le bruit ayant une surface d'atténuation, longitudinale, sensiblement plane, qui forme une paroi du ou d'un passage d'écoulement de gaz et, dans la section transversale, est inclinée dans la canalisation d'un angle situé entre 20 et 70° par rapport à la partie de la paroi de canalisation s'opposant à celle-ci au travers du passage d'écoulement de gaz.

2. Dispositif suivant la revendication 1, dans lequel la section transversale du ou de chaque insert est un triangle rectangle dont le plus petit angle a au moins 20°.

3. Dispositif suivant la revendication 2, dans lequel le plus petit angle a au moins 25°.

4. Dispositif suivant la revendication 2 ou 3, dans lequel les surfaces de l'insert correspondant aux côtés de l'angle droit du triangle sont ajustées contre des parois mutuellement perpendiculaires de la canalisation, la surface d'hypoténuse étant la surface d'atténuation.

5. Dispositif suivant l'une quelconque des revendications précédentes, dans lequel un insert unique se trouve entre les parois opposées de la canalisation.

6. Dispositif suivant l'une quelconque des revendications 1 à 4, dans lequel plusieurs inserts sont présents sous forme d'une zone autoportée, autoalignée d'inserts qui se trouvent dans la canalisation.

7. Dispositif d'atténuation pour atténuer la transmission des bruits dans une canalisation d'écoulement gazeux de section transversale circulaire, comprenant un insert absorbant le bruit disposé dans la canalisation de sorte que des passages d'écoulement gazeux soient définis dans l'arrangement au-delà de l'insert, l'insert consistant essentiellement en un corps d'un matériau absorbant le bruit, de section transversale sensiblement pleine triangulaire, isocèle ou équilatérale, chacune des trois extrémités longitudinales correspondant aux sommets du triangle entrant en contact avec la paroi de la canalisation pour s'aligner et supporter le corps en position dans la canalisation, et les surfaces longitudinales planes du corps procurant des surfaces longitudinales d'atténuation, qui forment les parois internes respectives des trois passages d'écoulement de gaz au-delà du corps dans la canalisation.

8. Dispositif suivant l'une quelconque des revendications précédentes, dans lequel les sommets de la section carrée ou triangulaire du corps sont chanfreinés pour procurer des surfaces de contact de faible surface aux extrémités.

9. Dispositif suivant l'une quelconque des revendications précédentes, dans lequel la surface de la section du ou des passages d'écoulement de gaz du dispositif d'atténuation compose de 30 à 60% de la surface de section transversale de la canalisation comme un tout dans le dispositif d'atténuation.

10. Dispositif suivant l'une quelconque des revendications précédentes, dans lequel le ou chaque corps d'insert consiste essentiellement en une mousse polymérique flexible absorbant le bruit.

11. Insert absorbant le bruit pour atténuer la transmission des bruits dans une conduite d'écoulement de gaz, consistant essentiellement en un corps d'un matériau absorbant le bruit, qui est capable d'être autoporté et aligné dans une canalisation par engagement de ses extrémités longitudinales périphériques contre la paroi de la canalisation et/ou contre les extrémités périphériques d'un ou de plusieurs de ces inserts, adjacents, absorbant le bruit, et le corps ayant une surface d'atténuation longitudinale sensiblement plane et dans lequel la section transversale du corps est sensiblement solide et est un carré avec des sommets chanfreinés, un triangle rectangle dont le plus petit angle a au moins 20° ou un triangle isocèle ou équilatéral.

12. Insert suivant la revendication 11, dans lequel le corps consiste en un matériau en mousse absorbant le bruit.

13. Insert suivant la revendication 11 ou 12, dont la section transversale est un triangle rectangle dont le plus petit angle a au moins 25°.

14. Insert suivant l'une quelconque des revendications 11 à 13, dans lequel au moins une partie du corps présente une épaisseur solide d'au moins 80 mm dans une direction perpendiculaire à la surface d'atténuation.

15. Procédé pour procurer une atténuation du bruit dans une canalisation d'écoulement de gaz, comprenant un dispositif d'atténuation suivant l'une quelconque des revendications 1 à 10 à un endroit dans la canalisation.

16. Procédé suivant la revendication 15, dans lequel la canalisation d'écoulement de gaz fait partie d'un système de conditionnement d'air ou de ventilation dans un bâtiment.

17. Procédé suivant la revendication 15 ou 16, dans lequel un corps d'insert tel que défini à la revendication 10 est inséré dans une canalisation d'écoulement de gaz existante, entre une unité de conduite de l'écoulement de gaz et une ouverture dans la canalisation.
